# EUROPÄISCHE PATENTSCHRIFT

(11) **EP 0 779 699 B1**
(45) Veröffentlichungstag und Bekanntmachung des Hinweises auf die Patenterteilung: **03.03.1999**
(21) Anmeldenummer: 96116126.2
(22) Anmeldetag: 09.10.1996
(51) Int. Cl.: H02K 49/10, F04D 13/02

(54) **Magnetkupplung für eine Kreiselpumpe**
Magnetic coupling for a centrifugal pump
Accouplement magnétique pour une pompe centrifuge

(30) Priorität: 12.12.1995 DE 19546336
(43) Veröffentlichungstag der Anmeldung: 18.06.1997
(73) Patentinhaber: KSB Aktiengesellschaft, 67227 Frankenthal (DE)
(72) Erfinder: Worley, Andrew, Dr., 67227 Frankenthal (DE)

(56) Entgegenhaltungen:
- EP-A- 0 291 780
- DE-A- 2 911 070
- DE-A- 3 545 214

## Beschreibung

Gegenstand der Erfindung ist eine Magnetkupplung für eine Kreiselpumpe, mit einem antriebsseitigen Rotor, der auf seiner Innenseite Magnete trägt, und einem abtriebsseitigen Rotor, der auf seiner Außenseite Magnete trägt, sowie einem zwischen den Rotoren angeordneten Spalttopf, wobei die Verbindungsflächen der Rotoren und der Magnete jeweils eine aneinander angepaßte Kontur besitzen (Vgl. DE-A-29 11 070).

Bei Kreiselpumpen, die der Förderung gefährlicher oder umweltschädlicher Flüssigkeiten dienen, muß eine hohe Sicherheit gegen jeglichen Flüssigkeitsaustritt gewährleistet werden. Schwachpunkt der konventionellen Kreiselpumpen ist deren Wellenabdichtung, d. h. die Stelle an der die Welle durch die Gehäusewand geführt ist. Ein solcher Schwachpunkt ist nicht vorhanden bei Kreiselpumpen, deren Antriebsmotor mit dem Pumpenteil in einem gemeinsamen, hermetisch abgedichteten Gehäuse angeordnet ist, oder die von einem separat angeordneten Motor über eine Magnetkupplung angetrieben werden.

Der hermetische Abschluß im Bereich der Magnetkupplung wird durch einen Spalttopf gebildet. Ein mit der Motorwelle verbundener äußerer Rotor korrespondiert mit einem innerhalb des Spalttopfes befindlichen Rotor, der mit dem Pumpenlaufrad auf einer gemeinsamen Welle angeordnet ist. Die Drehbewegung des äußeren, antriebsseitigen Rotors wird durch Magnetkräfte über den Spalttopf auf den inneren, abtriebsseitigen Rotor übertragen. Die auf der Innenseite des antriebsseitigen und der Außenseite des abtriebsseitigen Rotors befindlichen Magnete sind an ihrer Außen- bzw. ihrer Innenfläche jeweils mit dem Rotor verbunden.

Nun besitzen aber die koaxial und konzentrisch zueinander drehenden Rotoren eine im wesentlichen zylindrische Form. Die relativ leicht herstellbare Zylinderform der Rotoren bringt Nachteile für die Befestigung der Magnete mit sich, da entweder eine den Fertigungsaufwand wesentlich erhöhende Anpassung der Verbindungsflächen zwischen Rotoren und Magneten vorgenommen werden muß oder, bei einer fehlenden Anpassung, nur relativ kleine Verbindungsflächen zur Verfügung stehen.

Eine erste Möglichkeit der Verbindung zwischen Rotor und Magneten besteht darin, quaderförmige Magnete durch ein geeignetes Mittel, beispielsweise durch Verkleben, mit der zylindrischen Innen- bzw. Außenwand des Rotors zu verbinden. Dieses Verfahren ist zwar mit geringem Aufwand verbunden, hat aber den Nachteil einer wegen der kleinen Verbindungsflächen stark herabgesetzten Festigkeit.

Eine zweite Möglichkeit besteht darin, bereits bei der Herstellung der Magnete Verbindungsflächen an diesen vorzusehen, die in ihrer Kontur der zylindrischen Verbindungsfläche des jeweiligen Rotors entsprechen. Eine solche Auslegung führt zu großen Verbindungsflächen und damit zu einer festen und dauerhaften Verbindung. Nachteilig ist aber die sich hier ergebende hohe Komplexität der verschiedenen Magnete, da für jeden in Frage kommenden Außen- und Innendurchmesser der Rotoren eine eigene Magnetausführung zu fertigen ist.

An dritter Stelle besteht noch die Möglichkeit, die Verbindungsflächen des Rotors an die Verbindungsflächen der Magnete anzupassen. Bei der Verwendung quaderförmiger Magnete bedeutet dies, daß ebene Verbindungsflächen in die Rotoroberfläche eingebracht werden müssen, was bei spanender Bearbeitung vor allem für den mit inneren Verbindungsflächen ausgestatteten antriebsseitigen Rotor einen erheblichen Aufwand bedeutet.

Der Erfindung liegt die Aufgabe zugrunde, eine Magnetkupplung zu schaffen, die bei vergleichsweise geringem Fertigungsaufwand für die Rotoren und die Magnete eine großflächige Verbindung zwischen diesen beiden ermöglicht.

Ausgehend von einer Magnetkupplung der eingangs genannten Art, wird diese Aufgabe erfindungsgemäß gelöst durch in einem Sinterverfahren gefertigte Rotoren.

Alternativ hierzu können aber auch die Rotoren jeweils gebildet werden durch einen Grundkörper und einen oder mehrere mit dem Grundkörper zu verbindende, in einem Sinterverfahren gefertigte Ringe, welche der Aufnahme der Magnete dienen. Diese Alternative bietet den Vorteil, daß die Rotoren in Anpassung an die jeweils zu übertragenden Drehmomente mit einer erforderlichen Anzahl von Ringen bzw. Magneten ausgestattet werden können. Eine Überdimensionierung wird somit vermieden; Material wird eingespart.

Das in einer Vielzahl von Anwendungen erprobte Sintern von metallischen Werkstoffen erlaubt die Fertigung von Rotoren, die an beliebig konturierte Verbindungsflächen der Magnete anzupassen sind. Wenn auch den mit ebenen Verbindungsflächen ausgestatteten Magneten wegen der besseren Verfügbarkeit und des geringeren Preises der Vorzug zu geben ist, so können die Rotoren aber auch ohne weiteres an anders gestaltete Verbindungsflächen der Magnete angepaßt werden. Die Verbindung mit den Magneten erfolgt dabei mit Hilfe einer der bekannten Methoden, vorzugsweise werden die Rotoren und die Magnete miteinander verklebt.

Anhand von Ausführungsbeispielen wird die Erfindung näher erläutert. Die Zeichnung zeigt in
- Fig. 1: eine über eine Magnetkupplung angetriebene Kreiselpumpe in schematisierter Darstellung, in
- Fig. 2: eine Ansicht einer Verbindung zwischen Rotoren und Magneten, deren Verbindungsstellen nicht aneinander angepaßt sind, in
- Fig. 3: eine Ansicht einer Verbindung, bei der die Verbindungsstellen der Magnete an die unveränderten Zylinderflächen der Rotoren angepaßt sind, in
- Fig. 4: eine Ansicht einer erfindungsgemäßen, mit gesinterten Rotoren ausgestatteten Magnetkupplung, bei welcher die Verbindungsflächen der Rotoren an die Oberflächen der Magnete angepaßt sind, und in
- Fig. 5: eine erfindungsgemäße Magnetkupplung, bei welcher die Rotoren jeweils aus einem Grundkörper und mehreren damit verbundenen gesinterten Ringen bestehen, welche als Magnetträger dienen.

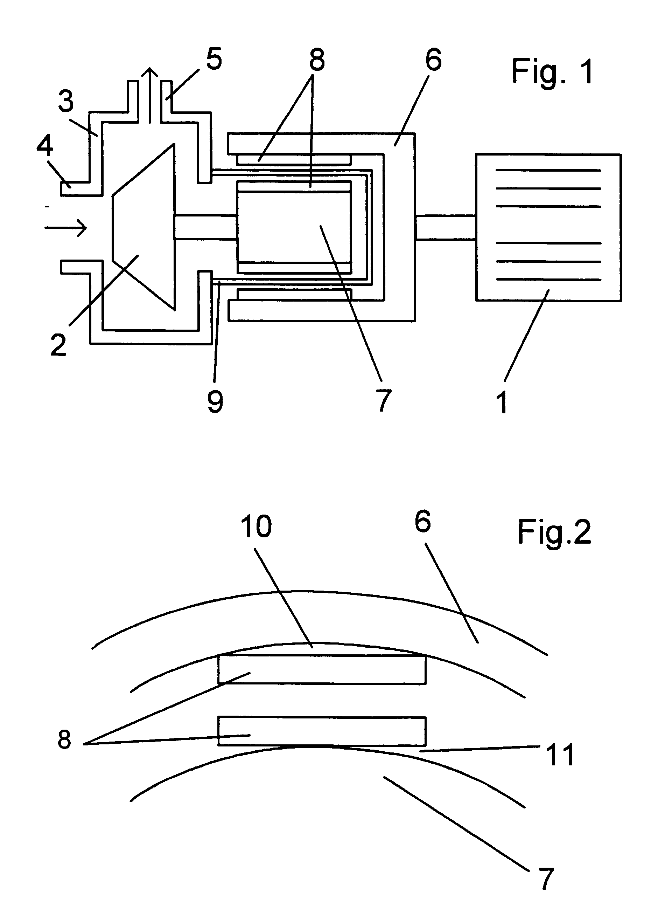

Die Fig. 1 zeigt den grundsätzlichen Aufbau einer durch einen Elektromotor 1 angetriebenen Kreiselpumpe, die mit einem Laufrad 2 und einem Gehäuse 3 ausgestattet ist. Das Gehäuse 3 besitzt einen Einlauf 4 und einen Auslaß 5. Der Übertragung der von dem Elektromotor 1 gelieferten Antriebskraft zum Laufrad 2 dient eine Magnetkupplung, die im wesentlichen durch einen äußeren, antriebsseitigen Rotor 6 und einen inneren, abtriebsseitigen Rotor 7 gebildet wird. Zwischen den beiden Rotoren 6 und 7, die jeweils mit Magneten 8 bestückt sind, befindet sich ein Spalttopf 9, der den Innenraum der Kreiselpumpe gegenüber der Umgebung hermetisch abdichtet.

Die Anbringung der Magnete 8 an den Rotoren 6 und 7 erfolgt - beispielsweise durch Kleben - an den einander berührenden Verbindungsflächen der Rotoren 6 bzw. 7 und der Magnete 8. Findet keinerlei Anpassung der Konturen der zylinderförmigen Rotoren 6 bzw. 7 und der quaderförmigen Magnete 8 statt, so ergeben sich lediglich in etwa als Linien ausgebildete Berührungsflächen zwischen den miteinander zu verbindenden Teilen. Die Fig. 2 zeigt eine solche Gestaltung. Dabei ergeben sich im übrigen Spalte 10 und 11 zwischen einem Magneten 8 und dem ihn tragenden Rotor 6 bzw. 7.

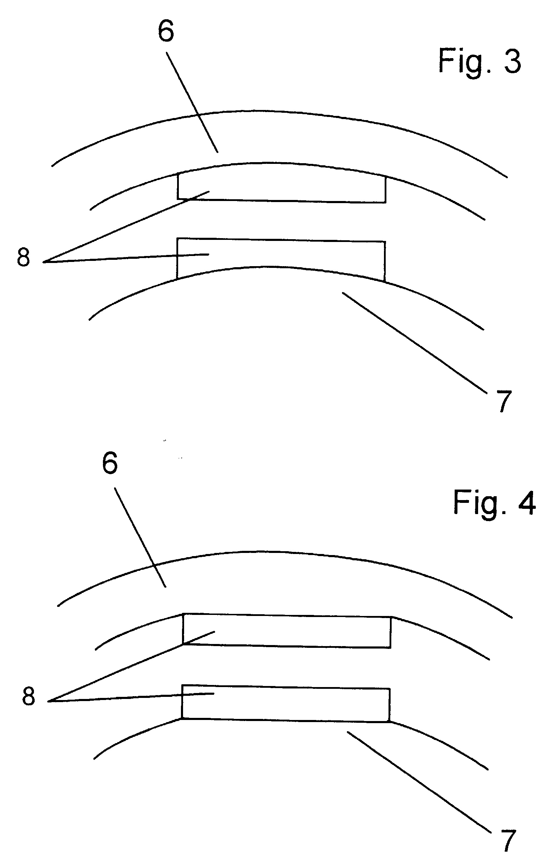

Eine sehr innige Verbindung ergibt sich, wenn die Konturen des Rotors 6 bzw. 7 einerseits und der Magnete 8 andererseits im Bereich der Verbindungsflächen aneinander angepaßt sind. Eine erste mögliche Ausführung dieser Art zeigt die Fig. 3. Dort sind die Verbindungsflächen der Magnete 8 in gleicher Weise abgerundet wie die Zylinderflächen der Rotoren 6 und 7. Eine derartige Anpassung erfordert allerdings zwei verschiedene Magnetausführungen für eine Magnetkupplung einer einzigen Größe. Jede weitere Größe erfordert wiederum zwei exakt angepaßte Magnetausführungen. Dies aber führt zu einer großen Komplexität der Magnete und damit einem hohen Fertigungs- und Lageraufwand.

Die Fig. 4 zeigt eine erste erfindungsgemäße Gestaltung. Hier sind die Berührungsflächen des Rotors 6 bzw. 7 an quaderförmige Magnete 8 angepaßt. Diese Anpassung der Rotoren 6 und 7 ermöglicht es, über einen größeren Bereich unterschiedlicher Rotordurchmesser jeweils die gleichen einfach gestalteten Magnete einzusetzen. Die Fertigung der Rotoren 6 und 7 erfolgt durch Sintern eines für diesen Einsatzzweck geeigneten Werkstoffes, insbesondere Metall. Die durch das Sintern erreichte Formgebung erübrigt eine anderenfalls nur durch aufwendige Bearbeitungsvorgänge zu erreichende Anpassung der Verbindungsflächen der Rotoren 6 und 7 an die Verbindungsflächen der Magnete 8.

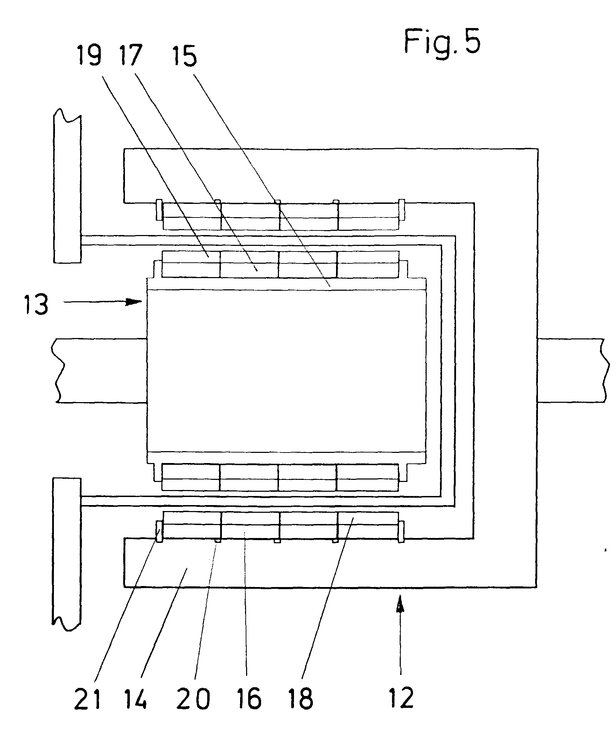

Eine weitere erfindungsgemäße Gestaltung ist in der Fig. 5 dargestellt. Der antriebsseitige Rotor 12 und der abtriebsseitige Rotor 13 dieser Ausführung bestehen jeweils aus einem Grundkörper 14 bzw. 15 und einzelnen, mit dem Grundkörper 14 bzw. 15 verbundenen Ringen 16 bzw. 17. Die Ringe 16, 17 tragen mit ihnen verklebte Magnete 18, 19, wobei auch hier eine gegenseitige Anpassung der Verbindungsflächen gegeben ist.

Während die Grundkörper 14, 15 aus Vollmaterial oder durch Gießen mit einer gegebenenfalls anschließenden spanenden oder spanlosen Bearbeitung hergestellt werden, entstehen die Ringe 16, 17 in einem Sinterverfahren.

Die Anzahl der in der Magnetkupplung der Fig. 5 einsetzbaren Magnete kann in Entsprechung zu dem zu übertragenden Drehmoment gewählt werden, wobei die Magnete 18 und 19 jeweils paarweise in gleicher Höhe angeordnet werden.

Im Ausführungsbeispiel ist eine maximale Anzahl von jeweils vier Ringen 16, 17 und Magneten 18, 19 gegeben. Es kann aber selbstverständlich auch eine andere maximale Anzahl vorgegeben werden.

Eine gegenüber einer vorgegebenen maximalen Anzahl von Magneten 18, 19 vorzunehmende Reduktion kann auf zweierlei Weise erfolgen. Entweder werden alle Ringe 16, 17 im Grundkörper 14 und auf dem Grundkörper 15 befestigt, während die Magnete 18, 19 in verringerter Anzahl paarweise auf einzelnen Ringen 16, 17 befestigt werden. Oder es werden jeweils mit Magneten 18, 19 bestückte Ringe 16, 17 im Grundkörper 14 und auf dem Grundkörper 15 befestigt, wobei die Befestigungen so zu gestalten sind, daß für jede mögliche Anzahl eine eigene Befestigungsmöglichkeit besteht.

Der Grundkörper 14 bietet hierfür ein Beispiel: Er besitzt Nuten 20, die an die Stirnflächen der Ringe 16 anschließen und die jeweils einen Sprengring 21 zur Befestigung der Ringe 16 aufnehmen können.

## Patentansprüche

1. Magnetkupplung für eine Kreiselpumpe, mit einem antriebsseitigen Rotor (6), der auf seiner Innenseite Magnete (8) trägt, und einem abtriebsseitigen Rotor (7), der auf seiner Außenseite Magnete (8) trägt, sowie einem zwischen den Rotoren (6,7) angeordneten Spalttopf (9), wobei die Verbindungsflächen der Rotoren (6,7) und der Magnete (8) jeweils eine aneinander angepaßte Kontur besitzen, **gekennzeichnet durch** in einem Sinterverfahren gefertigte Rotoren (6,7).

2. Magnetkupplung nach dem Oberbegriff des Patentspruches 1, dadurch gekennzeichnet, daß die Rotoren (12,13) jeweils gebildet werden durch einen Grundkörper (14 bzw. 15) und einen oder mehrere mit dem Grundkörper (14 bzw. 15) zu verbindende, in einem Sinterverfahren gefertigte Ringe (16 bzw. 17), welche der Aufnahme der Magnete (18 bzw. 19) dienen.

3. Magnetkupplung nach Anspruch 2, dadurch gekennzeichnet, daß der Grundkörper (14 bzw. 15) mit Befestigungsmöglichkeiten (20,21) für eine unterschiedliche Anzahl von Ringen (16 bzw. 17) ausgestattet ist.

4. Magnetkupplung nach einem der Ansprüche 1 bis 3, gekennzeichnet durch ebene Verbindungsflächen zwischen den Rotoren (6,7) und den Magneten (8).

5. Magnetkupplung nach einem der Ansprüche 1 bis 4, dadurch gekennzeichnet, daß die Rotoren (6,7) und die Magnete (8) miteinander verklebt sind.

## Claims

1. Magnetic clutch for a centrifugal pump, having a rotor (6) on the input-drive side which is fitted on its inside with magnets (8), and having a rotor (7) on the output-drive side which is fitted on its outside with magnets (8), as well as having a split cup (9) arranged between the rotors (6, 7), the connecting surfaces of the rotors (6, 7) and of the magnets (8) each having a mutually matching contour, characterized by rotors (6, 7) manufactured using a sintering method.

2. Magnetic clutch according to the precharacterizing clause of Patent Claim 1, characterized in that the rotors (12, 13) are each formed by a base body (14 and 15, respectively) and one or more rings (16 and 17 respectively) which can be connected to the base body (14 or 15, respectively), are manufactured using a sintering method and are used to accommodate the magnets (18 and 19, respectively).

3. Magnetic clutch according to Claim 2, characterized in that the base body (14 or 15, respectively) is equipped with attachment capabilities (20, 21) for a different number of rings (16 and 17, respectively).

4. Magnetic clutch according to one of Claims 1 to 3, characterized by smooth connecting surfaces between the rotors (6, 7) and the magnets (8).

5. Magnetic clutch according to one of Claims 1 to 4, characterized in that the rotors (6, 7) and the magnets (8) are bonded to one another.

## Revendications

1. Accouplement magnétique pour une pompe centrifuge, avec un rotor (6) situé du côté du moteur, qui porte des aimants (8) sur sa face intérieure, et un rotor (7) situé du côté de la sortie, qui porte des aimants (8) sur sa face extérieure, ainsi qu'un godet d'entrefer (9) disposé entre les rotors (6, 7), dans lequel les faces d'assemblage des rotors (6, 7) et des aimants (8) possèdent un profil mutuellement adapté, caractérisé par des rotors (6, 7) fabriqués par un procédé de frittage.

2. Accouplement magnétique suivant le préambule de la revendication 1, caractérisé en ce que les rotors (12, 13) sont chacun constitués par un corps de base (14, respectivement 15), et par un ou plusieurs anneaux (16, respectivement 17) fabriqués par un procédé de frittage, à assembler au corps de base (14, respectivement 15), qui servent à recevoir les aimants (18, respectivement 19).

3. Accouplement magnétique suivant la revendication 2, caractérisé en ce que le corps de base (14, respectivement 15) est muni de possibilités de fixation (20, 21) pour un nombre d'anneaux (16, respectivement 17) différent.

4. Accouplement magnétique suivant l'une quelconque des revendications 1 à 3, caractérisé par des faces d'assemblage planes entre les rotors (6, 7) et les aimants (8).

5. Accouplement magnétique suivant l'une quelconque des revendications 1 à 4, caractérisé en ce que les rotors (6, 7) et les aimants (8) sont collés les uns aux autres.
